# EUROPÄISCHE PATENTANMELDUNG

(11) **EP 2 008 789 A1**
(43) Veröffentlichungstag der Anmeldung: **31.12.2008**
(21) Anmeldenummer: 08010774.1
(22) Anmeldetag: 13.06.2008
(51) Int. Cl.: B29C 45/27

(54) **Anordnung einer Einspritzdüse zur Führung von Schmelzmasse in einer Kunststoffspritzgiessform**

(30) Priorität: 28.06.2007 DE 102007029954
(71) Anmelder: SFR Formenbau GmbH, 72770 Reutlingen (DE)
(72) Erfinder: Reinl, Horst, 72793 Pfullingen (DE)
(74) Vertreter: Ostriga, Sonnet, Wirths & Roche

(57) **Zusammenfassung**

Eine Anordnung einer Einspritzdüse (10) zur Führung von Schmelzemasse in einer Kunststoffspritzgießform od. dgl., weist einen beheizbaren Düsenkern (12) auf, der einen Schmelzekanal (14) umgibt, dessen mindestens eines Austrittsende (15) in einen formplattenseitigen Vorraum (20) mit einer einer Formhöhlung (F) vorgelagerten kalottenförmigen Innenfläche (21) mündet. Der Scheitelbereich (S) der kalottenförmigen Innenfläche (21) ist über eine Einspritzöffnung (22) mit der Formhöhlung (F) verbunden. Die Düsenkernspitze (13) ist von dem der Einspritzöffnung (22) abgewandten Innenflächenbereich (23) des Vorraums (20) mittels eines aus wärmeisolierendem Werkstoff bestehenden Ringkörpers (24) distanziert. Der Ringkörper (24) ist ein aus spritzverformbarem Werkstoff bestehendes Spritzgussteil, welches konzentrisch an eine Mantelfläche eines der Düsenkernspitze (13) zugeordneten Einlegeteils angeformt ist und welches eine mit der Mantelfläche des Einlegeteils haftverbundene Grenzfläche bildet. Die Mantelfläche des Einlegeteils und die Grenzfläche bilden sich quer zur Längsmittelachse (L) der Einspritzdüse (10) erstreckende Hinterschneidungsflächen. Das Einlegeteil ist gemeinsam mit dem angespritzten Ringkörper (24) aus dem formplattenseitigen Vorraum (20) herausnehmbar.

## Beschreibung

Die Erfindung betrifft eine Anordnung einer Einspritzdüse zur Führung von Schmelzemasse in einer Kunststoffspritzgießform od. dgl. entsprechend dem Anspruch 1.

Eine solche Anordnung einer Einspritzdüse ist beispielsweise in der US 6,315,549 B1 beschrieben.

Die bekannte Anordnung einer Einspritzdüse weist zwischen der Außenmantelfläche der Düsenkernspitze und dem der Einspritzöffnung abgewandten Innenflächenbereich des formplattenseitigen Vorraums einen Ringkörper aus wärmeisolierendem Werkstoff auf. Jener wärmeisolierende Werkstoff besteht aus einem duroplastischen Polyimid (PI), wie er beispielsweise unter dem Handelsnamen "VESPEL" der DuPont de Nemours Deutschland GmbH, 61343 Bad Homburg, DE, vertrieben wird.

Ein solcher Ringkörper aus PI bietet bereits gewisse Vorteile, denn er bildet eine elastische Dichtung zwischen der Außenmantelfläche der Düsenkernspitze und dem vorerwähnten Innenflächenbereich des Vorraums. Zudem bildet der bekannte Ringkörper einen Isolationskörper, der einen zu großen Wärmeabfluss von der Düsenkernspitze hin zum Werkzeug verhindert. Als weniger günstig wird es indessen angesehen, dass Pl, im vorliegenden Fall ein duroplastisches Polyimid, nur schwer verarbeitbar, und deshalb zumeist nur als präzisionsgesintertes Formteil lieferbar ist. Beim Gegenstand der US 6,315,549 B1 bildet der Ringkörper (s. Fig. 5A Pos. 55) ein mittelbar durch Schnappverrastung auf der Düsenkernspitze befestigtes Formteil. Solche Formschlussverbindungen erfordern eine relativ aufwändige Einhaltung von Toleranzen, weil sonst eine gegebenenfalls durchlässige Fuge der Formschlussverbindung zwischen Ringkörper und Düsenkernspitze ein Dichtigkeitsproblem im Übergangsbereich von der Düsenkernspitze zum hinteren Einspritzdüsen-Einbaufeld hin darstellen kann.

Von der EP 0 124 680 B1 (s. Fig. 2 Pos. 42, 44) ist es bekannt, den sich an die Düsenkernspitze anschließenden Außenmantel der Einspritzdüse mit einem aus zwei über- und aneinander liegenden Bereichen bestehenden Formkörper zu umschließen, dessen innerer Bereich (Pos. 44) eine Keramikhülse und dessen äußerer Bereich (Pos. 42) eine Hülse aus rostfreiem Stahl ist.

Ausgehend von der eingangs beschriebenen Anordnung einer Einspritzdüse gemäß der US 6,315,549 B1, liegt der Erfindung die Aufgabe zugrunde, die bekannte Anordnung einer Einspritzdüse so weiter zu entwickeln, dass die Einspritzdüse einfach montiert, gegebenenfalls, z.B. wartungsbedingt, einfach demontiert und die Anordnung mit dem Ziel einer verbesserten Dichtfunktion mit noch größerer Genauigkeit als bisher gefertigt werden kann.

Diese Aufgabe wird entsprechend der Gesamtheit der Merkmale des Anspruchs 1 gelöst.

Ein wesentliches Merkmal der Erfindung besteht darin, dass der Ringkörper aus einem spritzverformbaren Werkstoff besteht und ein konzentrisch an einer Mantelfläche eines Einlegeteils im Werkzeug angeformtes Spritzgussteil ist. Der Ringkörper wird demnach im so genannten Einlege-Spritzgießverfahren innerhalb einer Werkzeugform als Spritzgussteil hergestellt. Dieses mit dem Einlegeteil eine bauliche Einheit bzw. einen Verbundbauteil bildende Spritzgussteil wird nach seiner Fertigstellung dem Spritzgießwerkzeug entnommen und sodann gemeinsam mit dem haftverbundenen Einlegeteil in ein der Produktion dienendes Spritzgießwerkzeug eingebaut.

Im Unterschied dazu wird entsprechend dem Bekannten (US 6,315,549 B1) der Ringkörper gesondert als separates Formteil hergestellt. Dieser Vorgang bedingt von Haus aus zusätzliche Fertigungstoleranzen, welche später beim Einfügen des Ringkörpers in den Raum zwischen Düsenkernspitze und Innenflächenbereich des Vorraums zu toleranzbedingten Ungenauigkeiten, verbunden mit Dichtigkeitsproblemen, führen können. Ein solches zu Ungenauigkeiten führendes Einfügen vermeidet die Erfindung insoweit, als der Ringkörper selbst, ein Spritzgussteil also, mit der Mantelfläche des der Düsenkernspitze zugeordneten Einlegeteils keine Fuge, sondern vielmehr eine haftverbundene Grenzfläche bildet. Um diese adhesive Verbindung zusätzlich mechanisch zu sichern, bilden die Mantelfläche des Einlegeteils und die Grenzfläche sich quer zur Mittelachse der Einspritzdüse erstreckende Hinterschneidungsflächen.

Wesentlich ist demnach, dass die Erfindung mit der Anwendung des vorbeschriebenen Einlege-Spritzgiessverfahrens in wenigstens einem Bereich des Vorraums eine beim Bekannten ansonsten vorhandene und zu Dichtigkeitsproblemen führende Fügung vermeidet.

Für eine gegebenenfalls wartungsbedingte Demontage ist es weiterhin wichtig, dass das Einlegeteil gemeinsam mit dem angespritzten Ringkörper - und zwar leicht - aus dem formplattenseitigen Vorraum herausnehmbar ist.

Eine erfindungsgemäße Ausgestaltung besteht darin, dass die Mantelfläche des Einlegeteils von der Außenmantelfläche der Düsenkernspitze gebildet ist. Dieses bedeutet, dass die Düsenkernspitze im Wege des Einlege-Spritzgiessverfahrens, innerhalb einer Werkzeugform also, mit dem spritzverformbaren Werkstoff zur Bildung des Ringkörpers formgebend umspritzt wird. Die Außenmantelfläche des Ringkörpers wird hierbei durch die Gravur der Formhöhlung gestaltet. Dabei ist der Ringkörper mittels der Grenzfläche fugenlos mit der Außenmantelfläche der Düsenkernspitze verbunden.

Eine andere Ausführungsform entsprechend der Erfindung besteht darin, dass die Mantelfläche des Einlegeteils von der Innenmantelfläche eines im Wesentlichen kreiszylindrischen Körpers gebildet ist. Bei einem solchen im Einlege-Spritzgiessverfahren herzustellenden Verbundbauteil ist die Grenzfläche des Ringkörpers der Innenmantelfläche des kreiszylindrischen Körpers zugeordnet, während die Formgebung der Innenmantelfläche des Ringkörpers mittels eines werkzeugseitigen Kerns erfolgt.

Zweckmäßig ist die Außenfläche des kreiszylindrischen Körpers dazu geeignet, einen Gleitsitz mit einer komplementären kreiszylindrischen Innenmantelfläche des formplattenseitigen Vorraums zu bilden. Jene erfindungsgemäße Anordnung ist besonders dann zweckmäßig, wenn sich die Düsenkernspitze, bedingt durch unterschiedliche Erwärmung, ständig in Axialrichtung hin- und herbewegt. Bei dieser erfindungsgemäßen Ausführungsform ist demnach die Außenmantelfläche des Ringkörpers durch das ihn umgebende Einlegeteil gegen Verschleiß geschützt.

Eine Weiterbildung entsprechend der Erfindung besteht darin, dass der kreiszylindrische Körper aus einem Metall von relativ geringer Wärmeleitfähigkeit, wie z.B. aus Titan, besteht.

Bezüglich der Auswahl eines spritzverformbaren Werkstoffes gibt es unterschiedliche Möglichkeiten. So sieht die Erfindung beispielsweise vor, dass der spritzverformbare Werkstoff aus Keramik besteht. Hierbei müssen die Elastizitätseigenschaften von Keramik in Kauf genommen werden.

Besonders bevorzugt die Erfindung eine Ausführungsform, gemäß welcher der spritzverformbare Werkstoff aus einem hochtemperaturbeiastbaren Kunststoff, wie z.B. aus Polyetheretherketon (PEEK), besteht. Dabei hat sich besonders zweckmäßig ein PEEK mit dem Handelsnamen VICTREX PEEK der VICTREX EUROPA GMBH, 65719 Hofheim/Ts., DE, herausgestellt. Und zwar ist der Werkstoff VICTREX PEEK ein Polymer mit einer Repetiereinheit oxy-1,4-Phenylen-Oxy-1,4-Phenylen-Carbonyl-1,4-Phenylen.
VICTREX PEEK und VICTREX PEEK Compounds haben eine Glasübergangstemperatur von 143 °C und eine Schmelztemperatur von 343 °C. Die Dauergebrauchstemperatur liegt bei ca. 260 °C. Dies bedeutet, dass der von der Erfindung bevorzugte vorbeschriebene spritzverformbare Kunststoff VICTREX PEEK insbesondere im Zusammenhang mit der Spritzgießverformung von Kunststoffen unterschiedlichster Verarbeitungstemperaturen geeignet ist.

Eine Variante der Erfindung besteht darin, dass die Hinterschneidungsflächen durch eine etwa kreisringförmige Ausnehmung in der Außenmantelfläche der Düsenspritze und, komplementär dazu, durch einen etwa kreisringförmig vorspringenden Innenbundbereich der Grenzfläche des Ringkörpers gebildet sind.

Für den Fall, dass der Ringkörper an den kreiszylindrischen Körper angespritzt werden soll, ist es zweckmäßig, dass die Hinterschneidungsflächen durch einen etwa kreisringförmig vorspringenden Innenbund des kreiszylindrischen Körpers und, dazu komplementär, durch einen etwa kreisringförmig zurückspringenden Ausnehmungsbereich der Grenzfläche des Ringkörpers gebildet sind.

Eine Ausführungsform, gemäß welcher der kreiszylindrische Körper teilweise vom Ringkörper eingebettet ist, besteht darin, dass der Ringkörper die der Einspritzöffnung abgewandte Stirnfläche des kreiszylindrischen Körpers mit einer von einem Ringflansch gebildeten Grenzfläche übergreift.

Zur besseren Lagefixierung des Ringkörpers bzw. des aus kreiszylindrischem Körper und Ringkörper bestehenden Verbundbauteils sieht die Erfindung außerdem vor, dass in die Außenmantelfläche der Düsenkernspitze eine etwa an den Raumbedarf des Ringkörpers oder an den Raumbedarf des aus kreiszylindrischem Körper und Ringkörper bestehenden Verbundbauteils angepasste kreiszylindrische Ausnehmung eingelassen ist.

In den Zeichnungen sind bevorzugte Ausführungsbeispiele entsprechend der Erfindung näher dargestellt, es zeigt:
Fig. 1 eine Ansicht einer Einspritzdüse für eine Kunststoffspritzgießform,
Fig. 2 einen teilweisen axialen Längsschnitt der Einspritzdüse entsprechend der in Fig. 1 mit II-II gekennzeichneten Schnittlinie sowie einen Teilschnitt durch eine Formplatte,
Fig. 3 und 4 den Fig. 1 und Fig. 2 entsprechende Darstellungen einer abgewandelten Ausführungsform,
Fig. 5 eine vergrößerte Detaildarstellung entsprechend der in Fig. 2 mit V bezeichneten Einkreisung und
Fig. 6 eine vergrößerte Detaildarstellung entsprechend der in Fig. 4 mit VI bezeichneten Einkreisung.

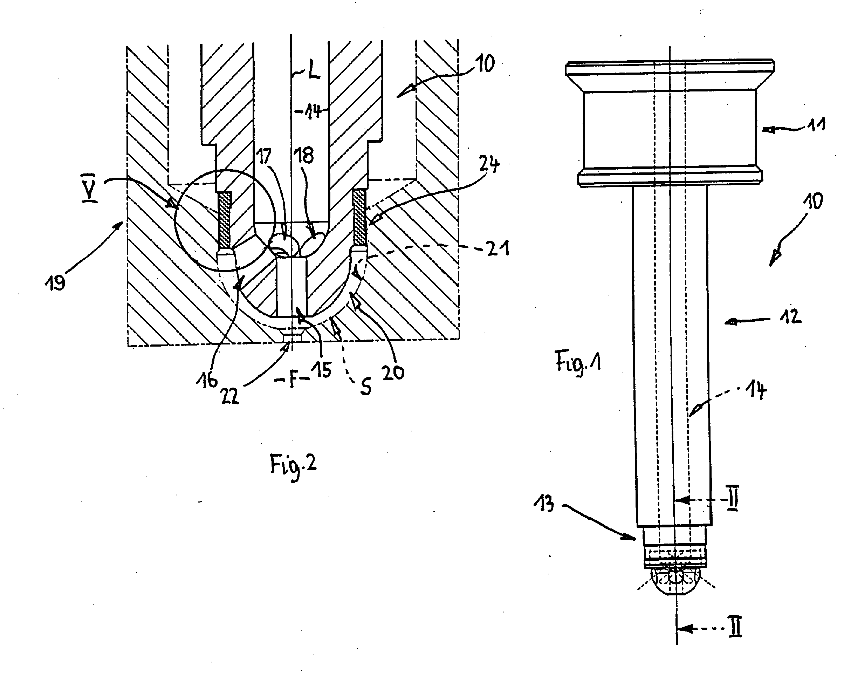

In Fig. 1 ist eine Einspritzdüse zur Führung von Schmelzemasse in einer Kunststoffspritzgießform mit der Bezugsziffer 10 bezeichnet. Die Einspritzdüse 10 weist im Wesentlichen einen Anschlussbereich 11, einen Schaft bzw. Düsenkern 12 und eine Düsenkernspitze 13 auf. Der Düsenkern 12 ist regelmäßig von einer nicht dargestellten elektrischen Heizung, z.B. von einer Heizmanschette oder von einem gewendelten Rohrheizkörper, umgeben.

Der Anschlussbereich 11 der Einspritzdüse 10 kann z.B. einem Verteiler für die Schmelzemasse, insbesondere einem Heißkanalverteiler, zugeordnet sein. Ein zentraler Schmelzekanal 14 ist in Fig. 1 gestrichelt eingezeichnet. Der Schmelzekanal 14 geht in mehrere Austrittsbohrungen über, welche besonders aus Fig. 1 ersichtlich und dort mit 15, 16, 17, 18 bezeichnet sind. Die Austrittsbohrungen 15-18 münden in einen in einer teilweise dargestellten Formplatte 19 eingearbeiteten Vorraum 20. Letzterer weist eine kalottenförmige Innenfläche 21 auf, deren Scheitelbereich S über eine Einspritzöffnung 22 mit einer Formhöhlung verbunden ist, die man sich in Fig. 2 etwa bei F vorstellen kann.

Die Düsenkernspitze 13 ist von dem der Einspritzöffnung 22 abgewandten Innenflächenbereich 23 mittels eines wärmeisolierenden Ringkörpers 24 distanziert. Der Ringkörper 24 ist an die Außenmantelfläche 25 der rotationssymmetrischen Düsenkernspitze 13 im Einlege-Spritzgießverfahren innerhalb einer Werkzeugform konzentrisch angespritzt. Die Düsenkernspitze 13 bildet demnach im vorliegenden Fall ein Einlegeteil.

Der Ringkörper 24 besteht aus PEEK und bildet ein Polymer mit einer Repetiereinheit Oxy-1,4-Phenylen-Oxy-1,4-Phenylen-Carbonyl-1,4-Phenylen, welches unter dem Handelsnamen VICTREX PEEK vertrieben wird.

Bedingt durch das Einlege-Spritzgießverfahren ist der Ringkörper 24 mittels einer von ihm gebildeten Grenzfläche G mit der Außenmantelfläche 25 der Düsenkernspitze 13 haftverbunden.

Außerdem ist der Ringkörper 24 mittels Hinterschneidungsflächen auf der Außenmantelfläche 25 der Düsenkernspitze 13 in Richtung der Längsmittelache L der Anordnung lagegesichert. Die Hinterschneidungsflächen sind durch eine etwa kreiszylindrische Ausnehmung 26 in der Außenmantelfläche 25 der Düsenkernspitze 13 und komplementär dazu, durch einen etwa kreiszylindrisch vorspringenden Innenbundbereich 27 der Grenzfläche G des Ringkörpers 24 gebildet.

Zur Lagesicherung des Ringkörpers 24 insgesamt ist in die Außenmantelfläche 25 der Düsenkernspitze 13 eine etwa an den Raumbedarf des Ringkörpers 24 angepasste etwa kreiszylindrische Ausnehmung 28 eingelassen.

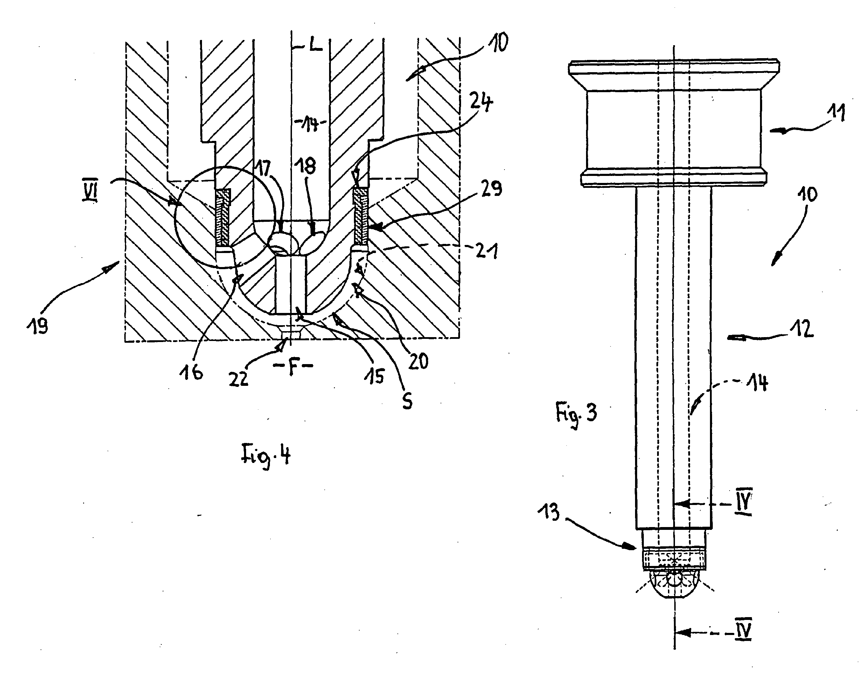

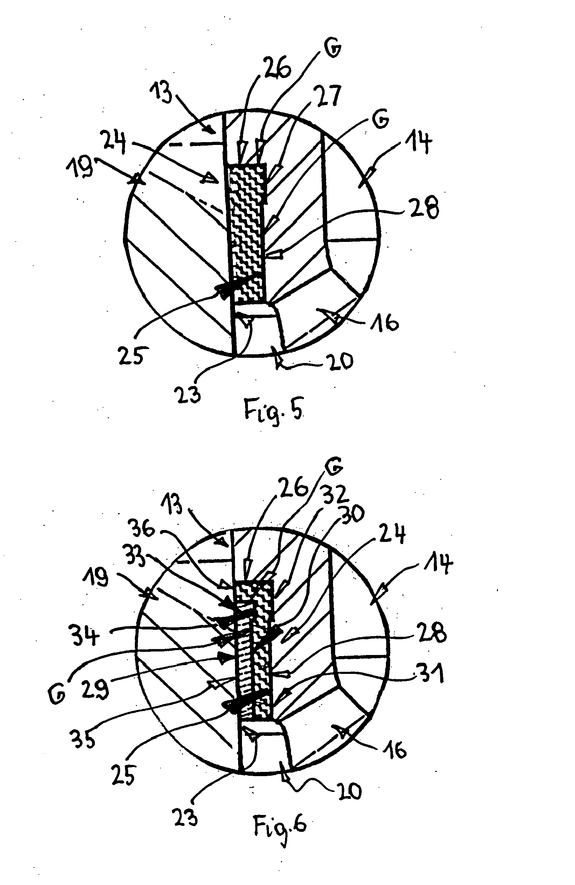

Der in den Fig. 1, 2 und 5 dargestellten ersten Ausführungsform entspricht - bis auf eine Abwandlung - die in den Fig. 3, 4 und 6 dargestellte zweite Ausführungsform grundsätzlich. Bei beiden Ausführungsformen werden deshalb für übereinstimmende Elemente und Bereiche der gezeigten Anordnung stets dieselben Bezugsziffern verwendet.

Im Unterschied zur ersten Ausführungsform gemäß den Fig. 1, 2 und 5 ist bei der abgewandelten zweiten Ausführungsform entsprechend den Fig. 3, 4 und 6 zwischen dem Innenflächenbereich 23 des Vorraums 20 und der Außenmantelfläche 25 der Düsenkernspitze 13 ein Verbundbauteil 24, 29 angeordnet. Dieses Verbundbauteil besteht aus dem Ringkörper 24 und aus einem im Wesentlichen kreiszylindrischen Metallteil 29 aus rostfreiem Stahl. Und zwar ist der Ringkörper 24 im Einlege-Spritzgießverfahren an die Innenmantelfläche 30 und an die obere Stirnfläche des kreiszylindrischen Metallteils 29 angespritzt. Demnach bildet die Grenzfläche G des Ringkörpers 24 eine fugenlose Haftverbindung mit der Innenmantelfläche 30 und mit der der Einspritzöffnung 22 abgewandten oberen Stirnfläche des kreiszylindrischen Metallteils 29.

Zwischen der Außenmantelfläche 25 der Düsenkernspitze 13 und der Innenmantelfläche 31 des Ringkörpers 24 besteht eine Passfuge, in deren der Einspritzöffnung 22 abgewandtem Bereich ein Innenbund 32 des Ringkörpers 24 in die kreiszylindrische Ausnehmung 26 der Außenmantelfläche 25 der Düsenkernspitze 13 formschlüssig schnappverrastend eingreift. Außerdem übergreift der Ringkörper 24 die der Einspritzöffnung 22 abgewandte Stirnfläche des kreiszylindrischen Metallteils 29 mit einem Ringflansch 36, dessen Kontur an seiner dem kreiszylindrischen Metallteil 29 zugewandten Seite ebenfalls von der Grenzfläche G definiert ist.

Zur zusätzlichen Axialsicherung sind auch bei der zweiten Ausführungsform Hinterschneidungsflächen vorgesehen, welche durch einen etwa kreiszylindrisch vorspringenden Innenbund 33 des kreiszylindrischen Körpers 29 und, dazu komplementär, durch einen etwa kreiszylindrisch zurückspringenden Ausnehmungsbereich 34 der Grenzfläche G des Ringkörpers 24 gebildet sind.

Die Außenmantelfläche 35 des kreiszylindrischen Metallteils 29 ist dazu geeignet, einen Gleitsitz mit der an dieser Stelle komplementären Innenmantelfläche 23 des formplattenseitigen Vorraums 20 zu bilden.

## Patentansprüche

1. Anordnung einer Einspritzdüse (10) zur Führung von Schmelzemasse in einer Kunststoffspritzgießform od. dgl., mit einem beheizbaren Düsenkern (12), der einen Schmelzekanal (14) umgibt, dessen mindestens eines Austrittsende (15) in einen formplattenseitigen Vorraum (20) mit einer einer Formhöhlung (F) vorgelagerten kalottenförmigen Innenfläche (21) mündet, deren Scheitelbereich (S) über eine Einspritzöffnung (22) mit der Formhöhlung (F) verbunden ist, wobei die Düsenkernspitze (13) von dem der Einspritzöffnung (22) abgewandten Innenflächenbereich (23) des Vorraums (20) mittels eines aus wärmeisolierendem Werkstoff bestehenden Ringkörpers (24) distanziert ist, und wobei der Ringkörper (24) ein aus spritzverformbarem Werkstoff bestehendes Spritzgussteil ist, welches konzentrisch an eine Mantelfläche (25, 30) eines der Düsenkernspitze (13) zugeordneten Einlegeteils (bei 25, 29) angeformt ist und welches eine mit der Mantelfläche (25, 30) des Einlegeteils (bei 25, 29) haftverbundene Grenzfläche (G) bildet, wobei die Mantelfläche (25,30) des Einlegeteils (bei 25, 29) und die Grenzfläche (G) sich quer zur Längsmittelachse (L) der Einspritzdüse (10) erstreckende Hinterschneidungsflächen bilden, und wobei das Einlegeteil (bei 25, 29) gemeinsam mit dem angespritzten Ringkörper (24) aus dem formplattenseitigen Vorraum (20) herausnehmbar ist.

2. Anordnung einer Einspritzdüse nach Anspruch 1, **dadurch gekennzeichnet, dass** die Mantelfläche des Einlegeteils (bei 25) von der Außenmantelfläche (25) der Düsenkernspitze (13) gebildet ist.

3. Anordnung einer Einspritzdüse nach Anspruch 1, **dadurch gekennzeichnet, dass** die Mantelfläche des Einlegeteils von der Innenmantelfläche (30) eines im Wesentlichen kreiszylindrischen Körpers (29) gebildet ist.

4. Anordnung einer Einspritzdüse nach Anspruch 3, **dadurch gekennzeichnet, dass** die Außenmantelfläche (35) des kreiszylindrischen Körpers (29) dazu geeignet ist, einen Gleitsitz mit einer komplementären kreiszylindrischen Innenmantelfläche (23) des formplattenseitigen Vorraums (20) zu bilden.

5. Anordnung einer Einspritzdüse nach Anspruch 3 oder nach Anspruch 4, **dadurch gekennzeichnet, dass** der kreiszylindrische Körper (29) aus einem Metall von relativ geringer Wärmeleitfähigkeit, wie z.B. aus Titan, besteht.

6. Anordnung einer Einspritzdüse nach einem der Ansprüche 1 bis 5, **dadurch gekennzeichnet, dass** der spritzverformbare Werkstoff aus Keramik besteht.

7. Anordnung einer Einspritzdüse nach einem der Ansprüche 1 bis 5, **dadurch gekennzeichnet, dass** der spritzverformbare Werkstoff aus einem hochtemperaturbelastbaren Kunststoff, wie z.B. aus Polyetheretherketon (PEEK), besteht.

8. Anordnung einer Einspritzdüse nach einem der vorangehenden Ansprüche, **dadurch gekennzeichnet, dass** die Hinterschneidungsflächen durch eine etwa kreiszylindrische Ausnehmung in der Außenmantelfläche (25) der Düsenkernspitze (13) und, komplementär dazu, durch einen etwa kreiszylindrisch vorspringenden Innenbundbereich (32) der Grenzfläche (G) des Ringkörpers (24) gebildet sind.

9. Anordnung einer Einspritzdüse nach einem der vorangehenden Ansprüche, **dadurch gekennzeichnet, dass** die Hinterschneidungsflächen durch einen etwa kreiszylindrisch vorspringenden Innenbund (33) des kreiszylindrischen Körpers (29) und, dazu komplementär, durch einen etwa kreiszylindrisch zurückspringenden Ausnehmungsbereich (34) der Grenzfläche (G) des Ringkörpers (25) gebildet sind.

10. Anordnung einer Einspritzdüse nach einem der vorangehenden Ansprüche, **dadurch gekennzeichnet, dass** der Ringkörper (24) die der Einspritzöffnung (22) abgewandte Stirnfläche des kreiszylindrischen Körpers (29) mit der von einem Ringflansch (36) gebildeten Grenzfläche (G) übergreift.

11. Anordnung einer Einspritzdüse nach einem der vorangehenden Ansprüche, **dadurch gekennzeichnet, dass** in die Außenmantelfläche (25) der Düsenkernspitze (13) eine etwa an den Raumbedarf des Ringkörpers (24) oder an den Raumbedarf des aus kreiszylindrischem Körper (29) und Ringkörper (24) bestehenden Verbundbauteils angepasste kreiszylindrische Ausnehmung (26) eingelassen ist.
